(19) Europäisches Patentamt
European Patent Office
Office européen des brevets

(11) Publication number: **0 036 289**
**A2**

(12) EUROPEAN PATENT APPLICATION

(21) Application number: 81301010.5

(22) Date of filing: 10.03.81

(51) Int. Cl.$^3$: C 08 G 18/22

(30) Priority: 17.03.80 US 130934

(43) Date of publication of application: 23.09.81 Bulletin 81/38

(84) Designated Contracting States: DE FR GB

(71) Applicant: TROY CHEMICAL CORPORATION
1 Avenue L
Newark New Jersey 07105(US)

(72) Inventor: Singer, William
520 Maple Avenue
Teaneck New Jersey(US)

(72) Inventor: Nowak, Milton
492 Mayhew Court
South Orange New Jersey(US)

(72) Inventor: Driscoll, Alfred
33-55 14th Street
Long Island City, N.Y. 11106(US)

(74) Representative: Perry, Robert Edward et al,
GILL JENNINGS & EVERY 53-64 Chancery Lane
London WC2A 1HN(GB)

(54) **Tin-containing catalyst compositions, their use in catalysing urethane preparation, and methods of preparing urethanes in the presence of such catalysts.**

(57) A catalyst composition comprising a compound of tin and a compound of another catalytically active metal. The composition may be provided in solution and can be used to catalyse the reaction of an isocyanate compound with an active hydrogen-containing compound to form a urethane.

EP 0 036 289 A2

Croydon Printing Company Ltd

# TIN-CONTAINING CATALYST COMPOSITIONS, THEIR USE IN CATALYSING URETHANE PREPARATION, AND METHODS OF PREPARING URETHANES IN THE PRESENCE OF SUCH CATALYSTS

This invention relates to tin-containing catalyst compositions, to their use as catalysts in the preparation of urethanes, and to methods of preparing urethanes in the presence of such catalysts.

The chemical reaction between compounds having isocyanate groups and those have active or "labile" hydrogen atoms, e.g. compounds having OH, COOH or NH groups, is well known and is used for preparing a wide variety of products and, in particular, the polymers known as urethanes. The starting materials usually have a functionality of at least two,i.e., at least two functional groups per molecule, and often more. By the appropriate selection of starting materials, and using selected formulations, many and varied urethane products, including rubbers, plastics, coatings and moulded items, may readily be made.

The chemical reaction is generally catalysed, in order to increase the rate of production and/or to control the quality of the finished product. Suitable catalysts include organic bases, such as tertiary amines, e.g. triethylenediamine (Dabco), and tin compounds. Suitable catalytic compounds are usually soaps, such as tin octoate, or organotin compounds, such as dibutyltin dilaurate.

Organic base catalysts such as the amines are generally found to be most useful for reactions where the isocyanate compound is aromatic, but are not as useful for reactions involving aliphatic isocyanates. In the latter case the tin compounds are generally required to produce adequate reaction or "cure" for commercial purposes. In particular, dibutyltin dilaurate is widely used for this application and is in fact recommended so often for commercial use as to be considered the standard catalyst for this use by the polymer industry.

The reasons for the popularity of dibutyltin dilaurate are numerous. It is quite economical at the

levels required for catalyst use. Discoloration and other side effects in the products are minimal. Its catalytic activity is very high. However, one serious disadvantage is the short "pot-life" (i.e. the time between the mixing of the total urethane-forming composition and its final use) of the catalysed compositions containing it. This time is critical because, if the period is too short, as it may often be with dibutyltin dilaurate, the composition may start to cure or gel before it can be practically applied or used.

"Catalysis of the Isocyanate-Hydroxyl Reaction", a paper presented by J.W. Britain and P.G. Gemeinhardt of Mobay Chemical Company at the Spring 1960 meeting of the American Chemical Society, lists many metals as having at least some catalytic activity for producing urethanes. These metals include bismuth, lead, tin, titanium, iron, antimony, uranium, cadmium, cobalt, thorium, aluminium, mercury, zinc, nickel, cerium, molybdenum, vanadium, manganese and zirconium. The results reported do not, however, include or involve the relationship between the so-called pot life and cure time.

According to a first aspect of the present invention, a catalyst composition comprises a compound of tin and a compound of another catalytically active metal which is preferably manganese, bismuth, cobalt, vanadium or iron. Other metals have been studied but may be less suitable in view of their degree of solubility in organic solvents, toxicity and/or cost.

According to a second aspect of the present invention, a catalyst composition of the invention is used as a catalyst in the preparation of urethanes. According to a third aspect of the present invention, in a method for preparing a urethane by reacting a compound having isocyanate groups with a compound having active hydrogen atoms in the presence of a catalyst, the catalyst is a composition of the invention.

The tin compound and the compound of the other catalytically ative metal can act synergically. The

weight ratio of the tin compound to the other metal compound is usually from 10:1 to 1:10, more preferably from 3:1 to 1:3 and most preferably about 1:1.

The tin compound is preferably a stannous compound. It may be, for example, a stannous halide such as $SnCl_2$ although in general, any catalytically active compound may be used. Again, the compound of the other catalytically active metal may be any conventional catalytic form, for example, manganous acetate, bismuth nitrate, cobaltous chloride, vanadium sulphate or ferric chloride. The compounds will usually be made up in a conventional form, e.g. in solution. However, a composition of the invention may be provided in the form of a solution, in a solvent, in which a greater amount of the other compound dissolves than in the absence of the tin compound. This may provide a clue to the catalytic activity of the compositions of the invention, although we do not wish to be bound in any way to this theory. For example, the amount of magnesium acetate necessary to form a 5% solution in a carbitol or other solvent goes into solution reluctantly and at times incompletely. If manganese acetate is added to a 5% solution of stannous chloride in the same solvent, it goes into solution readily and completely. This produces other advantages which include greater solution stability and also the ability to produce more concentrated solutions of catalysts.

In some instances, however, the addition of concentrated hydrochloric acid, for example, may be necessary to stabilize the stannous chloride solution. In general, a solution of the invention comprises at least 1%, more preferably 2%, and often at least 3% of either of both of the metal compounds. The percentages here and elsewhere in the specification may be by weight, by volume or w/v, as appropriate.

The following three Compositions illustrate two-component mixtures including an unknown amount (X) of a catalyst of the type illustrated in the subsequent Example 1 and used in the experiments of the following Examples 2

to 4. The catalyst compositions a, b, c, d, e, f, g, o, p, q, r and t of Example 1 are for reference purposes; the catalyst compositions h, i, j, k, l, m, n and s of Example 1 illustrate the invention. "Slt." is an abreviation for "slightly".

## COMPOSITION 1

Component I

325 g. titanium dioxide - dispersed in the following:

224 g. Desmophen 650 A-65 - a commercial polyester product (marketed by Mobay Chemical Co.) (Hydroxyl number 155-190; acid number 3; equivalent wt. 325; sp. gr. 1.14; solids 65% in ethylene glycol ethyl ether acetate).

22 g. Multron R-221-75 - a commercial polyester product (marketed by Mobay Chemical Co.) (Hydroxyl number 95-125; acid number 10 max; equiv. wt. 510; sp.gr. 1.11; solids 75% in ethylene glycol ethyl ether acetate).

70 g. ethylene glycol ethyl ether acetate.

641 g.

X g. catalyst - to be added and mixed at least 24 hours before Component I is added.

Component II

187 g. Desmodur N-75 - a biuret polyisocyanate (produced by Mobay Chemical Co.) having the general structure:

$$O{=}N{-}C{-}(CH_2)_6{-}N{-}(\overset{O}{\overset{\|}{C}}{-}N{-}(CH_2)_6{-}N{=}C{=}O)_2$$

-N=C=O content 16-17%; eq. wt. 255; sp. gr. = 1.07; 75% solids in 1:1 ethylene glycol acetate -xylol.

Component II was added to and mixed with Component I 30 min. before use of the composition.

## COMPOSITION 2

Component I

380 g. titanium dioxide dispersed in the following:

309 g. Polyol 1955 - a commercial polyester (produced by Spencer-Kellogg Division of Textron, Inc) (hydroxyl number 175; acid number 3; functionality 3.5; sp. gr. 1.15, mol. wt. 1180).

115 g. ethylene glycol ethyl ether acetate
804 g.

X g. catalyst

Component II

502 g. Spenlite P-25-60-CX - an aliphatic based polyisocyanate (produced commercially by Spencer Kellogg) - 7.6% terminal - NCO; sp.gr. 1.04; 60% solids in 1:1 xylol/ ethylene glycol ethyl ether acetate.

COMPOSITION 3

A fast drying and curing variation of Composition 2 was used, differing only in the composition of the solvent.

The 115 g. ethylene glycol ethyl ether acetate was replaced by:

5 g. ethylene glycol ethyl ether acetate
40 g. butyl acetate
30 g. isopropyl acetate
30 g. ethyl acetate
10 g. toluol
115 g.

EXAMPLE 1

The following catalyst solutions were prepared:

a. T-12 - 1% in cellosolve acetate (ethylene glycol ethyl ether)
b. Stannous chloride - 5% in carbitol (diethylene glycol monoethyl ether)
c. Manganous acetate . $4H_2O$ - 5% in carbitol
d. Cobaltous chloride . $6H_2O$ - 5% in carbitol
e. $VSO_4.11H_2O$ - 5% in carbitol
f. $Bi(NO_3)_2.5H_2O$ - 5% in carbitol
g. $FeCl_3$ - 5% in carbitol
h. Manganous acetate . $4H_2O$ - 2.5% in carbitol + stannous chloride - 2.5%
i. $Bi(NO_3)_2.5H_2O$ - 2.5% in carbitol + stannous chloride - 2.5%
j. $CoCl_2.6H_2O$ - 2.5% in carbitol + $SnCl_2$ - 2.5%

k. $VSO_4 \cdot 11H_2O$ - 2.5% in carbitol + $SnCl_2$ - 2.5%

l. $FeCl_3$ - 2.5% in carbitol + $SnCl_2$ - 2.5%

m. $MnAc_2 \cdot 4H_2O$ - 6.4% + $SnCl_2$ - 6.4% + HCl - Conc. - 2.4% - in carbitol

n. $MnAc_2 \cdot 4H_2O$ - 10% + $SnCl_2$ + 10% + Dimethylformamide - 80%

o. $MnAc_2 \cdot 4H_2O$ - 15% + carbitol - 85%

p. $SnCl_2$ - 15% + carbitol - 80% + Conc. HCl - 5%

q. 20% $MnAc_2 \cdot 4H_2O$ in 3:1 DMSO/carbitol (DMSO = Dimethyl sulfoxide)

r. 20% $SnCl_2$ in 3:1 DMSO/carbitol

s. $MnAc_2 \cdot 4H_2O$ - 5% + $SnCl_2$ - 5% + 3:1 DMSO/carbitol - 90%

t. Triethylenediamine (Dabco) 10% in butyl acetate

## EXAMPLE 2

Addition of many of the catalyst solutions described in Example 1 were used in the two-component composition systems described as Composition 1, with the results indicated in Table A below:

To 100 g. of Component I of Composition 1, there was added the amount of catalyst solution as indicated. Twenty-four hours later, there were added 29.2 g. of Component II. One-half hour later, a 3 mil film was cast onto a Leneta (coated paper) chart.

TABLE (Series) A

| Catalyst | Amount (equal metal) | Set to Touch, Time | Tack Free Time | Pot Life | Colour |
|---|---|---|---|---|---|
| a | 12.4 g. | 1 Hr. | 1½ Hrs. | 1¼ Hrs. | darkest |
| b | 0.75 g. | 1¾ Hr. | 4 Hrs. | 16 Hrs. | white |
| c | 2.09 g. | 1¾ Hr. | 4 Hrs. | 16 Hrs. | off-white |
| m | 1.1 g. | 1 Hr. | 1½ Hrs. | 16 Hrs. | white |
| a | 0.25 g. (reduced level) | 1½ Hr. | 4 Hrs. | 6 Hrs. | white |

This series of experiments clearly shows that the combination of manganese and tin as identified as m of Example 1 gives superior results to those obtained by the use of either tin or manganese alone, when compared on an equal total metal basis. Its advantages are shown in

set-to-touch time, tack-free time, and colour, when compared, for instance, with manganese catalyst system c. Catalyst system a, T-12, dibutyltin dilaurate, is completely unacceptable as to pot life characteristics on an equal metal basis, and decidedly inferior even at a reduced level.

TABLE (Series) B

| Catalyst | Amount (equal dry) | Set to Touch Time | Tack Free Time | Pot-Life | Colour |
|---|---|---|---|---|---|
| a | 0.25 g. | 1½ hrs. | 4 hrs. | 6 hrs. | white |
| b | 0.5 g. | 2½ hrs | 4 hrs. | 18 hrs. | white |
| c | 0.5 g. | 2½ hrs | 4 hrs. | 18 hrs. | slightly off-white |
| m | 0.25 g. | 2 hrs. | 4 hrs. | 24 hrs. | white |

The amount of catalyst in this series has been adjusted to give a four hour tack-free time. Catalysts containing manganese plus tin are superior to either tin or manganese when used alone in set-to-touch time, and exhibit a big advantage in "pot-life". The use of catalyst a, T-12, dibutyl tin dilaurate, results in markedly inferior pot life.

Table (Series) A and B both show the synergic effect of tin when it is combined with manganese. These data also show that such synergistic combinations are superior to the known "standard" catalyst, dibutyltin dilaurate.

TABLE (Series) C

| Catalyst | Amount | Set to Touch | Tack Free | Pot-Life | Colour |
|---|---|---|---|---|---|
| b | 0.5 g. | 2½ hrs. | 4 hrs. | 18 hrs. | white |
| c | 0.5 g. | 2½ hrs. | 4 hrs. | 18 hrs. | off-white(brown) |
| d | 0.5 g. | 2½ hrs. | 6 hrs. | 20 hrs. | off-white(purple) |
| e | 0.5 g. | 2½ hrs. | 6 hrs. | 20 hrs. | off-white(green) |
| f | 0.5 g. | 1½ hrs. | 4 hrs. | 18 hrs. | white |
| g | 0.5 g. | 2½ hrs. | 6 hrs. | 24 hrs. | very dark |
| h | 0.5 g. | 1½ hrs. | 2½ hrs. | 24 hrs | white |
| i | 0.5 g. | 1½ hrs. | 2½ hrs. | 24 hrs. | white |
| j | 0.5 g. | 2 hrs. | 5½ hrs. | 24 hrs. | slt. off-white |
| k | 0.5 g. | 2 hrs. | 5½ hrs. | 26 hrs. | slt. off-white |
| l | 0.5 g. | 2 hrs. | 5½ hrs. | 20 hrs. | off-white |
| a | 0.25 g. | 2½ hrs. | 4 hrs. | 6 hrs. | white |

In the Series shown in Table C, many of the metals mentioned in the prior art have been checked as catalysts in the composition formulation of Example I, both when used alone and in combination with tin in synergic combination.

Tin when used in combination with other catalysts improve the usefulness of manganese, for example, in set-to-touch time, tack-free time, colour and pot-life (compare for instance, "8" vs. "3").

Tin improves bismuth as a catalyst in tack-free time and pot-life (compare "9" vs. "6"). Bismuth alone tends to cause "silking".

Tin improves cobalt in set-to-touch time, tack-free time, colour, and pot-life (compare "0" vs. "4").

Tin improves vanadium in set-to-touch time, tack-free time, colour and pot-life (compare "11" vs. "5").

Tin improves iron in set-to-touch time, tack-free time, and colour. There is some decrease in pot-life in this instance, but iron without tin is not practical in most instances because of colour limitations (compare "12" vs. "7").

In all cases tin improves the performance in combination with the other metal as compared with the other metal when used alone. Thus tin almost always gives improvement in pot-life, as well as produces improvement in other characteristics. The examples of Sn, "2" and T-12 "1", are included as controls.

## EXAMPLE 3

The tests described in Example 2 were repeated, except that the system of Composition 2 was used. To 100 g of Composition 2 there was added the amount of catalyst solution indicated. Twenty-four hours later there was added 62.3 g of Component II. One-half hour later, a 3 mil film was cast on a Leneta (coated paper) chart. In this test, an additional observation was made, "Cure Time to Failure". Failure in this test is defined when the plastic film, after

aging 72 hrs., is appreciably attacked by a wad of cotton saturated with ethylene glycol ethyl ether acetate left in contact with it for a period of up to 4 hours. Observations on the effects obtained were made hourly.

| Catalyst | Amt. | Set to Touch | Tack Free | Cure Time to Failure | Pot-Life | Colour |
|---|---|---|---|---|---|---|
| o | 0.5g. | 2½ hrs. | 6 hrs. | 1 hr. | 24 hrs. | Slightly off-white |
| p | 0.5g. | 2½ hrs. | 7 hrs. | 1 hr. | 24 hrs. | White |
| m | 0.5g. | 2 hrs. | 5 hrs. | 2 hrs. | 24 hrs. | White |
| a | 0.5g. | 1¾ hrs. | 5 hrs. | 2 hrs. | 8 hrs. | White |
| | In addition: | | | | | |
| t | 0.1g. | 2 hrs. | 3hrs. | | ½ hr. | White |

The above data obtained with a different and less reactive urethane formulation show that the kind of data obtained in Example 2 was not dependent of the solvents used to dissolve the catalytic metal salts, nor is it dependent on the source or nature of the isocyanate or labile hydrogen component. Tin, p, when added to manganese, o, gives a combination, m, which shows superior set-to-touch time, tack-free time, colour and cure, while maintaining the same pot life. T-12, a, is considerably inferior in pot-life, and Dabco t, even at a very much lower level, has practically no pot-life at all.

EXAMPLE 4

The tests described in Example 3 were repeated using the system of Composition 3. The ratios of components are the same as those shown in Example 3.

| Catalyst | Amt. | Set to Touch | Tack Free | Cure Time to Failure | Pot-Life | Colour |
|---|---|---|---|---|---|---|
| q | 1g. | 2 hr. | $4\frac{1}{2}$ hrs. | 2 hrs. | 10 hrs. | Off-white |
| r | 1g. | 2hrs. | 5 hrs. | 2 hrs | 12 hrs. | White |
| s | 1g. | $1\frac{1}{2}$ hrs. | $2\frac{1}{2}$ hrs. | 3 hrs. | 14 hrs. | White |
| n | 1g. | $1\frac{1}{4}$ hrs. | $1\frac{1}{2}$ hrs. | 4 hrs. | 12 hrs. | White |
| a | 1g. | $1\frac{1}{2}$ hrs. | $2\frac{1}{2}$ hrs. | 3 hrs. | 4 hrs. | White |

This Example 4, as in Example 3, shows further evidence that the improvement obtained through the addition of tin to other metals is maintained in formulation changes of the solvents used in making the catalyst solution or the urethane formulation.

Efforts were made (1) by using double the normal amount of catalyst, and (2) by use of faster evaporating solvents to produce, with this somewhat less reactive system, a faster and more complete cure. T-12, a, yields an impractically short pot life. The combination of manganese and tin, when used in a mixed dimethyl sulfoxide and carbitol solvent, s, or in dimethylformamide, n, gives results superior to manganese, q, or tin, r, in set-to-touch time, tack-free time, cure and pot-life. Improvement in tack-free time and cure were particularly noteworthy.

The above Examples illustrate clearly the synergic effects obtained through the use of tin with other metals as catalysts for the urethane reaction. Among the advantages generally obtained are increased pot-life, improved colour, and improved set-to-touch time, tack-free time, and cure. Such tin-metallic catalyst combinations offer improved characteristics, particularly in pot-life, to the hitherto used urethane producing catalysts such as dibutyltin dilaurate and Dabco.

CLAIMS

1. A catalyst composition comprising a compound of tin and a compound of another catalytically active metal.

2. A composition according to claim 1, wherein the other metal is manganese.

3. A composition according to claim 1, wherein the other metal is bismuth.

4. A composition according to claim 1, wherein the other metal is cobalt.

5. A composition according to claim 1, wherein the other metal is vanadium.

6. A composition according to claim 1, wherein the other metal is iron.

7. A composition according to any preceding claim for use as a catalyst in the preparation of urethanes.

8. A composition according to any preceding claim wherein the weight ratio of the tin compound to the other metal compound is from 10:1 to 1:10.

9. A composition according to any preceding claim in the form of a stable solution in a solvent and comprising a greater amount of the other metal compound than will dissolve in the solvent in the absence of the tin compound.

10. A method for preparing a urethane, which comprises reacting a compound having isocyanate groups with a compound having active hydrogen atoms in the presence of a catalyst, characterised in that the catalyst is a composition according to any preceding claim.